# FASCICULE DE BREVET EUROPEEN

(11) **EP 1 091 791 B1**
(45) Date de publication et mention de la délivrance du brevet: **05.02.2003**
(21) Numéro de dépôt: 99922253.2
(22) Date de dépôt: 03.06.1999
(51) Int. Cl.: B01D 25/26

(54) **ELEMENT FILTRANT DESTINE A ETRE UTILISE DANS UN DISPOSITIF DE FILTRATION**
FILTERELEMENT ZUR VERWENDUNG IN EINER FILTERVORRICHTUNG
FILTERING ELEMENT FOR USE IN A FILTERING DEVICE

(30) Priorité: 05.06.1998 FR 9807071
(43) Date de publication de la demande: 18.04.2001
(73) Titulaire: Alfa Laval Moatti snc, 78340 Les-Clayes-sous-Bois (FR)
(72) Inventeur: CHRISTOPHE, Théophile, F-78330 Fontenay-le-Fleury (FR); DAVIDSSON, Thomas, S-114 29 Stockholm (SE)
(74) Mandataire: Busnel, Jean-Benoît
(86) Numéro de dépôt international: FR9901303
(87) Numéro de publication internationale: WO99064132

(56) Documents cités:
- FR-A- 1 267 223
- FR-A- 1 480 977
- FR-A- 2 530 963
- GB-A- 991 301
- US-A- 3 079 001
- US-A- 3 516 542

## Description

La présente invention concerne un élément filtrant destiné à être utilisé dans un dispositif de filtration.

Plus particulièrement, l'invention concerne un élément filtrant pourvu d'une ouverture centrale et destiné à être assemblé avec un élément du même type pour former un filtre. Ce filtre est susceptible d'être associé à d'autres filtres en constituant ainsi un bloc de filtration destiné à être placé à l'intérieur d'un carter pour réaliser une cartouche filtrante.

D'une manière générale, chaque élément filtrant comporte deux faces respectivement interne et externe au filtre, un rebord intérieur délimitant le pourtour de l'ouverture centrale et un rebord périphérique extérieur entre lesquels est monté un tamis parallèle auxdites faces interne et externe. Chaque face de l'élément filtrant comporte en outre des nervures radiales s'étendant en vis-à-vis entre les rebords extérieur et intérieur pour former sur les faces interne et externe des secteurs angulaires.

Par ailleurs, chaque nervure de la face interne de l'un des éléments vient en contact avec une nervure en regard de la face interne de l'autre élément pour délimiter des cellules alimentées d'une part via des passages d'admission ménagés sur le rebord intérieur des secteurs de la face externe de chaque élément et débouchant à l'extérieur, d'autre part via des passages de refoulement ménagés sur le rebord extérieur des secteurs de la face interne de chaque élément, chaque passage de refoulement de l'un des éléments étant disposé en regard d'un passage de l'autre élément en formant un orifice de refoulement.

Ces éléments filtrants comportent généralement une ouverture centrale pour former un conduit d'alimentation disposé ainsi dans l'axe du filtre, le fluide à filtrer pénétrant dans ce filtre par les passages d'admission ménagés sur le rebord intérieur pour ressortir par les passages de refoulement ménagés sur le rebord extérieur ou vice versa.

En effet, les cartouches filtrantes généralement utilisées comportent au moins un filtre et un distributeur de fluide à filtrer, monté rotatif et coaxialement dans le conduit. Le distributeur est pourvu quant à lui d'une chambre de sectionnement destinée à isoler périodiquement au moins deux secteurs angulaires disposés sur la face externe de chaque élément filtrant, en communiquant uniquement, à ce moment déterminé, avec les deux secteurs au moyen des passages réalisés dans le rebord intérieur desdits secteurs.

Dans une variante de réalisation, le dispositif de filtration comprend, en outre, un fourreau d'étanchéité et de guidage monté coaxialement entre le distributeur et le filtre. Ce fourreau comporte une pluralité d'orifices sur sa paroi cylindrique de telle manière que lesdits orifices soient situés en regard des passages d'admission d'au moins un filtre formant le bloc de filtration.

Ainsi, une partie du fluide déjà filtré s'introduit à contre-courant par les orifices de refoulement puis dans les secteurs angulaires isolés afin de permettre le nettoyage par décolmatage de leur portion de tamis.

Dès lors, il faut observer qu'un secteur isolé est un secteur qui ne participe pas à la filtration active du fluide à épurer.

Les éléments filtrants connus possédant généralement huit secteurs angulaires par face externe et interne, il s'ensuit que, lors de l'obturation successive à des moments déterminés de deux secteurs, la capacité de filtration du filtre est de l'ordre de 75 %.

En outre, chaque secteur angulaire des éléments filtrants comporte une armature radiale s'étendant entre les rebords intérieur et extérieur et une armature annulaire concentrique s'étendant transversalement en deux nervures radiales consécutives. Ainsi, la capacité de filtration du filtre est encore diminuée du fait du masquage du tamis par lesdites armatures, ce qui est contraire au but recherché.

Par ailleurs, les éléments filtrants connus sont réalisés en métal et plus généralement en aluminium, ce qui entraîne la présence de bavures entre le tamis et les nervures radiales, les rebords intérieur et extérieur ainsi que les armatures radiales et annulaires. La présence de ces bavures a pour principal inconvénient de boucher les mailles d'une portion du tamis, ce qui diminue également la capacité de filtration.

Par ailleurs, lesdites bavures sont susceptibles de se détacher et donc d'être véhiculées dans le fluide théoriquement épuré, ce qui peut avoir des effets particulièrement néfastes sur les organes mécaniques situés en aval des filtres.

En outre, les tamis utilisés avec les éléments filtrants connus sont eux-mêmes réalisés en métal et le plus souvent en Inox, ce qui limite les dimensions des ouvertures de mailles et donc par voie de conséquence la finesse de filtration.

Les éléments filtrants connus ont un poids relativement important, et leur fabrication par surmoulage sur le tamis nécessite des températures élevées de l'ordre de 800°C, ce qui entraîne des dépenses énergétiques importantes et donc un prix de revient relativement élevé. Enfin, la structure de ces éléments ne se prête pas à la réalisation d'éléments non plans et par exemple coniques.

Le document FR-A-2 530 963 décrit un élément filtrant à secteurs, à ouverture centrale avec un tamis parallèle aux faces de l'élément et des nervures radiales et concentriques.

En conséquence, un but de la présente invention est de proposer un élément filtrant permettant de résoudre les problèmes techniques précédents.

L'invention atteint son but par le fait que chaque face interne et externe de l'élément filtrant comprend au moins 16 secteurs angulaires, chacun étant formé d'une portion libre de tamis et en ce que le rapport de la surface libre filtrante du tamis à la surface totale de l'élément est compris entre 55 % et 68 %, et que chaque passage de refoulement comporte un plot de rigidification dont l'extrémité supérieure est en contact avec le plot de rigidification de l'autre élément selon la revendication 1.

Selon une autre caractéristique, chaque face interne et externe comprend au moins quatre nervures en vis-à-vis et diamétralement opposées deux à deux, lesquelles présentent chacune un renflement au moins partiellement cylindrique solidaire du rebord extérieur.

Selon encore une autre caractéristique avantageuse, l'élément filtrant est réalisé dans une matière thermoplastique telle que du polyamide.

Selon une autre caractéristique, le tamis est réalisé dans une matière telle que du polyamide ou du polyester avec une ouverture moyenne des mailles inférieure à 20 µm.

Selon encore une autre caractéristique, le tamis est réalisé en Inox.

Selon une autre caractéristique, l'élément filtrant est de forme discoïdale.

Selon une autre variante, l'élément filtrant est de forme conique.

L'élément filtrant selon l'invention permet donc de neutraliser, pendant la phase d'autonettoyage du tamis, un nombre restreint de secteurs angulaires. Autrement dit, en adoptant les dispositions de l'invention, on peut réaliser, dans un encombrement déterminé, un filtre ayant un meilleur rendement de filtration qu'auparavant, c'est-à-dire un filtre capable d'épurer ou de traiter un volume de fluide supérieur au volume traité par les éléments filtrants antérieurs.

Il convient d'observer que cette augmentation du rendement de filtration est également améliorée par le fait que les surfaces du tamis situées entre deux nervures radiales consécutives sont dépourvues d'armatures radiales et d'armatures annulaires.

L'invention sera mieux comprise, et des caractéristiques secondaires ainsi que leurs avantages apparaîtront au cours de la description qui va suivre accompagnée des dessins sur lesquels :
- la figure 1 représente une vue de la face interne de l'élément filtrant selon l'invention,
- la figure 2 représente une vue de la face externe de l'élément filtrant,
- la figure 3 représente une vue en coupe selon la ligne III-III de la figure 1 de deux filtres assemblés l'un contre l'autre, chaque filtre étant formé de deux éléments filtrants.

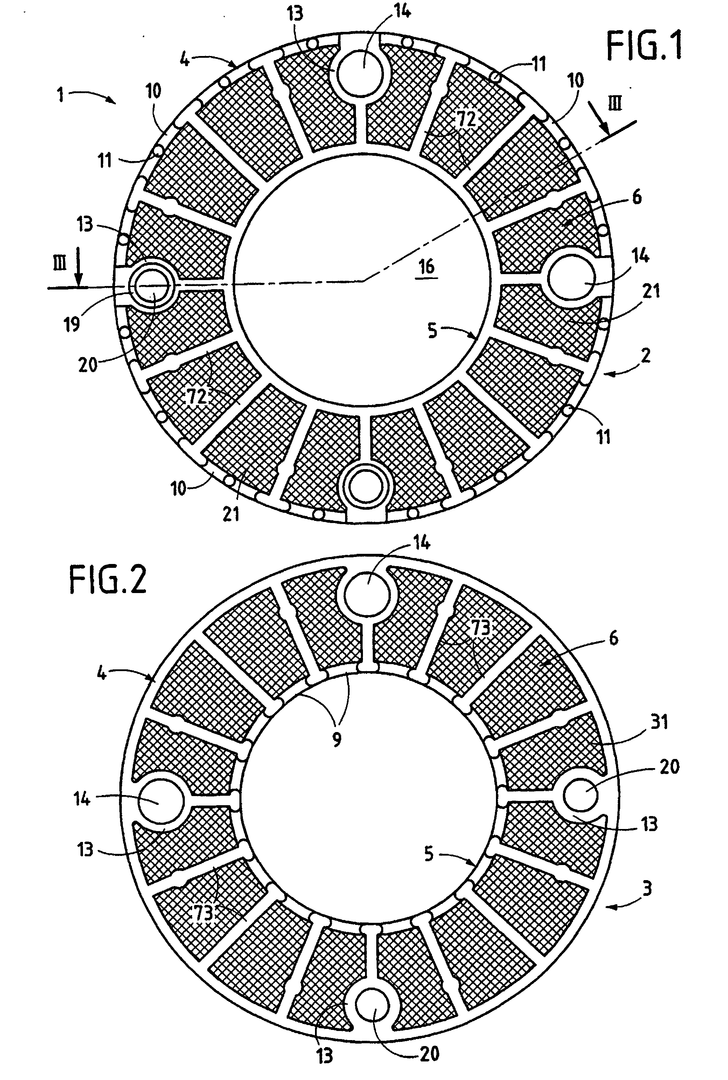

Un élément filtrant 1, conforme à l'invention, est représenté sur les figures 1 et 2, lesquelles représentent respectivement la face interne 2 et externe 3 dudit élément filtrant 1.

Ainsi, l'élément filtrant 1 de forme discoïdale dans ce mode de réalisation est délimité axialement par ses deux faces transversales respectivement interne 2 et externe 3.

L'élément filtrant 1 est également délimité radialement par un rebord périphérique extérieur 4 et par une ouverture centrale 16, laquelle a son pourtour délimité par un rebord intérieur 5, contre lequel vient en contact glissant un distributeur rotatif de fluide à épurer, après montage de l'élément filtrant dans le bloc de filtration (non représenté).

Un tamis 6 est monté entre les deux faces externes 3 et interne 2 et les deux rebords extérieur 4 et intérieur 5 de telle manière que le tamis 6 soit parallèle aux faces externe 3 et interne 2.

La face interne 2 de l'élément filtrant 1 comporte en outre des nervures radiales 72 régulièrement espacées reliant les rebords intérieur 5 et extérieur 4 en formant des secteurs angulaires 21 dans lesquels le tamis 6 a une surface libre de filtration. Cette surface est ainsi dépourvue de toute armature.

La face externe 3 comporte également des nervures radiales 73 régulièrement espacées qui s'étendent en vis-à-vis des nervures radiales 72 de la face interne 2 et qui relient donc les rebords intérieur 5 et extérieur 4 en formant des secteurs angulaires 31 disposés en regard des secteurs angulaires 21.

Les nervures radiales 72 et 73 disposées en vis-à-vis ont une épaisseur totale égale à l'épaisseur complète de l'élément filtrant 1.

Comme on peut le voir sur la figure 1, chaque secteur angulaire 21 de la face interne 2 est muni sur son rebord extérieur 4 d'un passage de refoulement 10 du fluide épuré qui débouche à l'extérieur. Chaque passage de refoulement 10 comporte également un plot 11 dont l'extrémité supérieure est contenue dans le plan commun aux nervures radiales 72 et au rebord interne 5.

De même, sur la figure 2, chaque secteur angulaire 31 de la face externe 3 est muni sur son rebord intérieur 5, d'un passage d'admission 9 du fluide à filtrer.

On note qu'il y a autant de secteurs angulaires 21 sur la face interne 2 que de sccteurs angulaires 31 sur la face externe 3 et que ces secteurs angulaires 21 et 31 qui sont au nombre de seize sont en regard. Par ailleurs, au moins quatre nervures 72 et 73 respectivement sur chaque face interne 2 et externe 3 sont munies d'un renflement 13 partiellement cylindrique et solidaire du rebord extérieur 4. Bien entendu, les nervures 72 et 73 possédant ces renflements 13 sont disposées en vis-à-vis et, comme on peut le voir sur la figure 1, deux nervures 72 adjacentes sont munies au niveau de leur renflement 13 d'un petit prolongement tubulaire 19 traversé par un alésage 20.

Chaque prolongement 19 est destiné à venir s'emboîter, lorsque l'on assemble deux éléments filtrants 1 identiques, leur face interne 2 étant l'une contre l'autre, dans un alésage complémentaire 14 ménagé sur chaque renflement 13 des deux nervures 72 dépourvues de prolongement 19 de l'autre élément filtrant 1.

Selon une autre caractéristique avantageuse, l'élément filtrant 1 est réalisé par moulage d'une matière plastique telle que du polyamide, ce qui lui confère une meilleure souplesse et évite toute formation de bavures au niveau des ouvertures de mailles du tamis 6 et permet d'améliorer le rendement de filtration de l'élément filtrant.

En outre, cette matière permet également d'utiliser des tamis réalisés avec du polyamide ou du polyester. Ces tamis qui ont une ouverture moyenne de mailles inférieure à 20 µm permettent également d'améliorer la finesse de filtration.

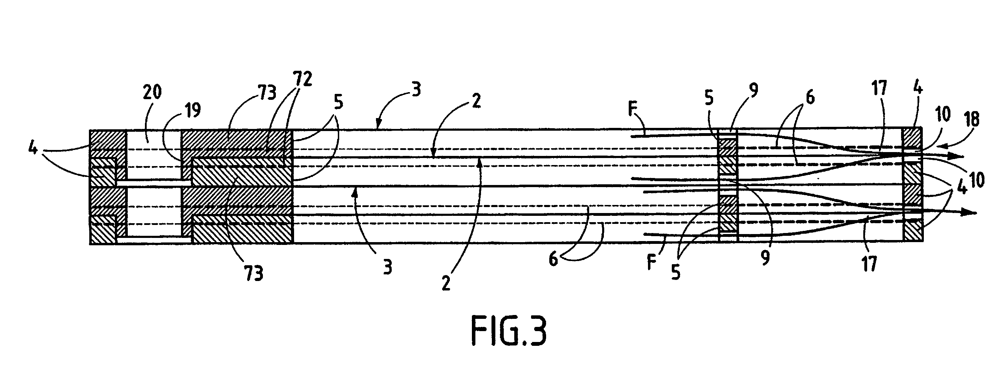

Le fonctionnement d'un bloc de filtration constitué de deux filtres eux-mêmes réalisés à partir de deux éléments filtrants 1 va être exposé ci-après en se référant à la figure 3.

Deux éléments filtrants 1 sont assemblés avec leur face interne 2 disposée en regard l'une de l'autre, les prolongements 19 d'un élément étant introduits dans les alésages 14 de l'autre élément avec un serrage radiale.

Chaque nervure 72 de la face interne de l'un des éléments vient en contact étanche avec une nervure 72 en regard de la face interne 2 de l'autre élément pour délimiter, en coopération avec leur tamis 6, des cellules.

Ces cellules sont rendues étanches au niveau de leur rebord intérieur par la mise en contact des rebords intérieurs 5 de chaque élément filtrant 1 formant un filtre et ainsi chaque passage de refoulement 10 de l'un des éléments étant disposé en regard d'un passage de refoulement 10 de l'autre élément formant avec celui-ci un orifice de refoulement 18.

La largeur radiale des orifices de refoulement 18 étant relativement importante au niveau du rebord périphérique extérieur 4, les plots 11 de rigidification permettent à la fois de conserver un contact étanche entre les rebords extérieurs 4 de deux faces externes 3 lors d'une éventuelle juxtaposition de plusieurs filtres et de maintenir la section de chaque orifice de refoulement 18 constante.

Comme représenté sur la figure 3, deux filtres sont juxtaposés de manière à associer, d'une part, les divers secteurs angulaires 21 et 31 et d'autre part les renflements 13 de ces éléments.

Ainsi, un fluide chargé d'impuretés et destiné à être filtré, baigne dans le conduit d'alimentation formé par les ouvertures centrales 16 des différents éléments filtrants 1, et est véhiculé (fléchés F) via les passages d'admission 9 vers les secteurs angulaires 31 des faces externes 3 des différents éléments filtrants 1.

Le fluide, situé du côté des faces externes 3 ne peut s'échapper qu'en traversant les tamis 6 car les rebords périphériques extérieurs 4 des faces externes 3 sont en contact étanche, ce qui interdit l'échappement direct du fluide.

Celui-ci traverse donc les tamis 6 en étant débarrassé de ses impuretés, et traverse les cellules 17 avant de ressortir filtré par les orifices de refoulement 18.

On note également que chaque élément filtrant comportant seize secteurs angulaires par face externe 3 et interne 2, il s'ensuit que, lors de l'obturation successive à des moments déterminés de deux secteurs 21 par une chambre de sectionnement (non représentée) d'un distributeur de fluide à filtrer monté rotatif coaxialement dans l'ouverture centrale des deux filtres, la capacité de filtration de chaque filtre est de l'ordre de 87,5 %.

Bien entendu, le bloc de filtration représenté sur la figure 3 peut être constitué d'un seul filtre réalisé à partir de deux éléments filtrants 1, ces dernières ayant leur face externe 3 disposée dans un carter (non représenté) de telle manière que les secteurs angulaires 31 forment des demi-chambres d'admission. De même, l'élément filtrant 1 peut être de forme tronconique avec une face interne 2 parallèle à la face externe 3.

## Revendications

1. Elément filtrant pourvu d'une ouverture centrale (16) et destiné à être assemblé avec un autre élément du même type pour former un filtre, chaque élément filtrant (1) comportant deux faces respectivement interne (2) et externe (3) au filtre, chaque face comprenant au moins seize secteurs angulaires (21, 31), chacun étant formé d'une portion libre de tamis (6) dont la surface est dépourvue d'armature, un rebord intérieur (5) délimitant le pourtour de l'ouverture centrale (16) et un rebord périphérique extérieur (4) entre lesquels est monté un tamis (6) parallèle auxdites faces interne (2) et externe (3) chaque face de l'élément comportant en outre des nervures radiales (72, 73) s'étendant en vis-à-vis entre les rebords extérieur (4) et intérieur (5) pour former sur les faces internes (2) et externe (3) des secteurs angulaires (21, 31) chaque nervure (72) de la face interne (2) de l'un des éléments pouvant venir en contact avec une nervure (72) en regard de la face interne (2) de l'autre élément pour délimiter des cellules (17) alimentées d'une part via des passages d'admission (9) ménagés sur le rebord intérieur (5) des secteurs (31) de la face externe (3) de chaque élément et débouchant à l'extérieur, d'autre part, via des passages de refoulement (10) ménagés sur le rebord extérieur (4) des secteurs (21) de la face interne (2) de chaque élément, chaque passage (10) de refoulement de l'un des éléments étant disposé en regard d'un passage (10) de l'autre élément en formant un orifice de refoulement (18), **caractérisé en ce que** chaque passage (10) de refoulement comporte un plot de rigidification (11) dont l'extrémité supérieure est susceptible de venir en contact avec le plot de rigidification (11) de l'autre élément et **en ce que** le rapport de la surface libre filtrante du tamis (6) à la surface totale de l'élément (1) est compris entre 55% et 68%.

2. Elément filtrant selon la revendication 1, **caractérisé en ce que** chaque face interne (2) et externe (3) comprend au moins quatre nervures en vis-à-vis et diamétralement opposées deux à deux, lesquelles présentent chacune un renflement (13), au moins partiellement cylindrique, solidaire du rebord extérieur (4).

3. Elément filtrant selon l'une quelconque des revendications précédentes, **caractérisé en ce qu'**il est réalisé dans une matière thermoplastique telle que du polyamide.

4. Elément filtrant selon l'une quelconque des revendications précédentes, **caractérisé en ce que** le tamis (6) est réalisé dans une matière telle que du polyamide ou du polyester avec une ouverture moyenne des mailles inférieure à 20 µm.

5. Elément filtrant selon l'une quelconque des revendications 1 à 3, **caractérisé en ce que** le tamis (6) est réalisé en Inox.

6. Elément filtrant selon l'une quelconque des revendications précédentes, **caractérisé en ce qu'**il est de forme discoïdale.

7. Elément filtrant selon l'une quelconque des revendications 1 à 5, **caractérisé en ce qu'**il est de forme conique.

## Claims

1. Filtering element provided with a central opening (16) and intended to be assembled with another element of the same type so as to form a filter, each filtering element (1) having two faces, inside (2) and outside (3) the filter respectively, each face comprising at least sixteen angular sectors (21, 31), each one being formed by a free portion of sieve (6), the surface of which has no reinforcement, an inner rim (5) delimiting the periphery of the central opening (16) and an outer peripheral rim (4), between which a sieve (6) is mounted parallel to said inner (2) and outer (3) faces, each face of the element further having radial ribs (72, 73) extending opposite each other between the outer (4) and inner (5) rims so as to form, on the inner (2) and outer (3) faces, angular sectors (21, 31), each rib (72) of the inner face (2) of one of the elements being able to come into contact with a rib (72) facing the inner face (2) of the other element so as to delimit cells (17) supplied on the one hand via inlet passages (9) made on the inner rim (5) of the sectors (31) of the outer face (3) of each element and opening outwards, on the other hand, via discharge passages (10) made on the outer rim (4) of the sectors (21) of the inner face (2) of each element, each discharge passage (10) of one of the elements being arranged facing a passage (10) of the other element, forming a discharge orifice (18), **characterised in that** each discharge passage (10) has a rigidification pin (11), the upper end of which is capable of coming into contact with the rigidification pin (11) of the other element and **in that** the ratio of the free filtering surface area of the sieve (6) to the total surface area of the element (1) is between 55% and 68%.

2. Filtering element according to Claim 1, **characterised in that** each inner (2) and outer (3) face comprises at least four ribs facing each other and diametrically opposite in twos, which each have a bulge (13), at least partly cylindrical, integral with the outer rim (4).

3. Filtering element according to any one of the preceding claims, **characterised in that** it is made of a thermoplastic material such as polyamide.

4. Filtering element according to any one of the preceding claims, **characterised in that** the sieve (6) is made of a material such as polyamide or polyester with an average mesh size of less than 20 µm.

5. Filtering element according to any one of Claims 1 to 3, **characterised in that** the sieve (6) is made of stainless steel.

6. Filtering element according to any one of the preceding claims, **characterised in that** it is discoid in shape.

7. Filtering element according to any one of Claims 1 to 5, **characterised in that** it is conical in shape.

## Patentansprüche

1. Filterelement, welches mit einer mittigen Öffnung (16) versehen ist und dazu bestimmt ist, mit einem anderen Element derselben Art zusammengesetzt zu werden, um einen Filter zu bilden, wobei jedes Filterelement (1) zwei Seitenflächen umfasst, nämlich im Innern (2) des Filters und außerhalb (3) desselben, wobei jede Seitenfläche zumindest 16 Winkelsektoren (21, 31) umfasst, von denen jeder aus einem freien Siebabschnitt (6), dessen obere Fläche keine Rahmenteile aufweist, einer inneren Randleiste (5), die den Umfangskreis der mittleren Öffnung (16) begrenzt, und einer äußeren Randleiste (4) gebildet ist, zwischen denen parallel zu der inneren (2) und äußeren (3) Seitenfläche ein Sieb (6) befestigt ist, wobei jede Seitenfläche des Elements ferner radiale Rippen (72, 73) aufweist, die sich einander gegenüberliegend zwischen der äußeren (4) und inneren (5) Randleiste erstrecken, um auf den inneren (2) und äußeren (3) Seitenflächen Winkelsektoren (21, 31) zu bilden, wobei jede Rippe (72) der inneren Seitenfläche (2) eines der Elemente mit einer gegenüberliegenden Rippe (72) der inneren Seitenfläche (2) des anderen Elements in Berührung gelangen kann, um Zellen (17) abzugrenzen, die einerseits über Einlassdurchlässe (9) gespeist werden, die in der inneren Randleiste (5) der Sektoren (31) der äußeren Seitenfläche (3) jedes Elements vorgesehen sind, und nach außen münden, und die andererseits über Aufstaudurchlässe (10), die in der äußeren Randleiste (4) der Sektoren (21) der inneren Seitenfläche (2) jedes Elements vorgesehen sind, wobei jeder Aufstaudurchlass (10) eines der Elemente gegenüber einem Durchlass (10) des anderen Elements angeordnet ist, wobei eine Aufstauöffnung (18) gebildet wird, **dadurch gekennzeichnet, dass** jeder Aufstaudurchlass (10) einen Verstärkungsstift (11) aufweist, dessen oberes Ende mit dem Verstärkungsstift (11) des anderen Elements in Berührung kommen kann, und dass das Verhältnis aus der freien, filternden Oberfläche des Siebs (6) zur Gesamtoberfläche des Elements (1) zwischen 55 % und 68 % liegt.

2. Filterelement nach Anspruch 1, **dadurch gekennzeichnet, dass** jede innere (2) und äußere (3) Seitenfläche zumindest vier einander gegenüberliegende und in Zweiergruppen gegenüberliegende Rippen aufweist, die jeweils eine Ausbauchung (13) aufweisen, die zumindest teilweise zylindrisch und mit der äußeren Randleiste (4) fest verbunden ist.

3. Filterelement nach einem der vorhergehenden Ansprüche, **dadurch gekennzeichnet, dass** es aus einem thermoplastischen Material wie etwa Polyamid hergestellt ist.

4. Filterelement nach einem der vorhergehenden Ansprüche, **dadurch gekennzeichnet, dass** das Sieb (6) aus einem Stoff wie etwa Polyamid oder Polyester mit einer mittleren Maschenöffnung, die kleiner als 20 µm ist, hergestellt ist.

5. Filterelement nach einem der Ansprüche 1 bis 3, **dadurch gekennzeichnet, dass** das Sieb (6) aus Inox hergestellt ist.

6. Filterelement nach einem der vorhergehenden Ansprüche, **dadurch gekennzeichnet, dass** es die Form einer Kreisscheibe hat.

7. Filterelement nach einem der Ansprüche 1 bis 5, **dadurch gekennzeichnet, dass** es eine konische Form hat.
